(19) Europäisches Patentamt
European Patent Office
Office européen des brevets

(11) EP 3 407 452 A1

(12) EUROPÄISCHE PATENTANMELDUNG

(43) Veröffentlichungstag:
28.11.2018 Patentblatt 2018/48

(51) Int Cl.:
H02J 3/00 (2006.01)  G06Q 30/06 (2012.01)
G06Q 40/04 (2012.01)  G06Q 50/06 (2012.01)

(21) Anmeldenummer: 17172779.5

(22) Anmeldetag: 24.05.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Siemens Aktiengesellschaft
80333 München (DE)

(72) Erfinder:
• Cuellar, Jorge
  82065 Baierbrunn (DE)
• Obradovic, Dragan
  85521 Ottobrunn (DE)

(54) STEUERUNG EINES VERTEILUNGSNETZWERKS

(57) Die Erfindung betrifft einen zweiseitigen Transfer, der das Erbringen einer Leistung und einer Gegenleistung umfasst, wobei das Erbringen der Leistung das Transportieren eines Leistungsgegenstands mittels eines Verteilungsnetzwerks erfordert. Dabei gibt ein Änderungsrahmen an, in welchem Bereich die Leistung und/oder die Gegenleistung abgeändert werden können.

Ein Verfahren zum Steuern des Transfers umfasst Schritte des Erfassens der Leistung, der Gegenleistung und des Änderungsrahmens; des Transportierens des Leistungsgegenstands mittels des Verteilungsnetzwerks in Abhängigkeit eines Betriebszustands des Verteilungsnetzwerks; und des Bestimmens der Gegenleistung auf Basis der innerhalb des Änderungsrahmens erbrachten Leistung.

FIG 1

EP 3 407 452 A1

**Beschreibung**

Die Erfindung betrifft ein Verteilungsnetzwerk. Insbesondere betrifft die Erfindung das Ausbalancieren zwischen einer einspeisenden und einer entnehmenden Komponente, die mit dem Verteilungsnetzwerk verbunden sind.

Ein Verteilungsnetzwerk ist zur Verteilung beispielsweise von Wasser, Gas oder elektrischer Energie einrichtet. Das zu verteilende Medium wird klassischerweise von einer oder nur wenigen Einspeisern dem Verteilungsnetzwerk bereitgestellt und kann von einer großen Vielzahl Verbrauchern entnommen werden.

Beispielsweise bei elektrischer Energie ist man inzwischen zur Nutzung kleiner und kleinster Mengen Energie durch verteilte Energieanbieter selbst übergegangen. Beispielsweise kann ein privater Haushalt eine Photovoltaikanlage umfassen und nicht nur als Verbraucher, sondern gleichzeitig auch als Einspeiser auftreten. Wasser- oder Windkraftwerke können kleine oder mittlere Energiemengen in das Verteilungsnetzwerk einspeisen, und große, insbesondere thermische Kraftwerke können zentralisiert große Mengen Energie an das Verteilungsnetzwerk bereitstellen.

Im Wesentlichen sollte im Verteilungsnetzwerk die Summe der eingespeisten Medienströme (Angebot) stets der Summe der entnommenen Medienströme (Nachfrage) entsprechen. Das Angebot kann variabel sein, weil beispielsweise Tag- und Nachtzeiten eine solare Energieanlage oder ein lokales Wetter eine Windkraftanlage beeinflussen kann. Die Nachfrage kann variabel sein, weil beispielsweise aufgrund eines Kälteeinbruchs oder zur Nachtzeit vermehrt Energie zu Heizzwecken entnommen werden kann. Um die Medienströme verbessert gegeneinander auszubalancieren wird allgemein ein direkterer Austausch zwischen Einspeisern und Verbrauchern angestrebt.

Außerdem können Einspeise- und Entnahmekonditionen, insbesondere eine Vergütung, dynamisch gesteuert werden. Liegt beispielsweise ein Überangebot an Energie vor, so kann die Vergütung für eingespeiste Energie sinken, teilweise sogar in den negativen Bereich. Umgekehrt kann die Vergütung ansteigen, wenn im Verteilungsnetzwerk zu wenig Energie - oder nicht an der benötigten Stelle - vorliegt.

Ein der Erfindung zu Grunde liegendes Problem besteht darin, eine Vielzahl einspeisender und entnehmender Teilnehmer eines Verteilungsnetzwerks verbessert zu organisieren. Die Erfindung löst dieses Problem mittels der Gegenstände der unabhängigen Ansprüche. Unteransprüche geben bevorzugte Ausführungsformen wieder.

Ein zweiseitiger Transfer umfasst das Erbringen einer Leistung und einer Gegenleistung, wobei das Erbringen der Leistung das Transportieren eines Leistungsgegenstands mittels eines Verteilungsnetzwerks erfordert oder umfasst. Ein Änderungsrahmen gibt an, in welchem Bereich die Leistung und/oder die Gegenleistung abgeändert werden können. Ein Verfahren zum Steuern des Transfers umfasst Schritte des Erfassens der Leistung, der Gegenleistung und des Änderungsrahmens; des Transportierens des Leistungsgegenstands mittels des Verteilungsnetzwerks in Abhängigkeit eines Betriebszustands des Verteilungsnetzwerks; und des Bestimmens der Gegenleistung auf Basis der innerhalb des Änderungsrahmens erbrachten Leistung.

Das Verteilungsnetzwerk ist zum Transportieren des Leistungsgegenstands eingerichtet, der beispielsweise Strom, Wasser, Gas oder eine Chemikalie umfassen kann. Um die Leistung zu bestimmen, kann der Leistungsgegenstand quantifiziert werden; außerdem können weitere Parameter wie ein Leistungszeitpunkt, eine Menge oder eine Qualität bestimmt werden.

Zur Verteilung des Leistungsgegenstands mittels eines Verteilungsnetzwerks mit erheblichen Anzahlen sowohl an einspeisenden als auch an entnehmenden Teilnehmern kann ein direkter Austausch nach Art eines Peer-to-Peer (P2P) Netzwerks erfolgen, um unnötige Transporte zu vermeiden. Dabei kann nicht von einer baumartigen Topologie des Verteilungsnetzwerks ausgegangen werden, bei der ein großer Einspeiser an der Wurzel und viele Entnehmer an den Zweigen sitzen. Vielmehr wird ein Austausch m x n angestrebt, bei dem dynamisch bestimmt werden kann, in welcher Weise Ströme des Leistungsgegenstands zwischen m Einspeisern und n Entnehmern verlaufen.

Der Erfindung liegt die Erkenntnis zu Grunde, dass dabei eine Einigung zwischen einem Einspeisenden und einem Entnehmenden über den Austausch des Leistungsgegenstands - unter Berücksichtigung einer Gegenleistung - durch technische Gegebenheiten des Verteilungsnetzwerks beeinflusst werden können. Beispielsweise kann zu einem vereinbarten Leistungszeitpunkt ein Überangebot des Leistungsgegenstands bestehen, sodass es nicht sinnvoll oder zumindest weniger attraktiv sein kann, eine weitere Einleitung zu betreiben. Solche Bedingungen können vom Betriebszustand des Verteilungsnetzwerks umfasst sein, sodass eine zuvor getroffene Vereinbarung zwischen dem Einleiter und dem Entnehmer über den Zusammenhang von Leistung und Gegenleistung angepasst werden muss. Wichtig ist hierbei, dass die Änderung nur innerhalb des vereinbarten Änderungsrahmens und nur in Abhängigkeit des Betriebszustands des Verteilungsnetzwerks erfolgen soll.

Das Transportieren kann ein Einspeisen des Leistungsgegenstands an einem Quellort und ein Entnehmen des Leistungsgegenstands an einem Zielort umfassen. Das des Verteilungsnetzwerk kann eine bestimmte Eigenkapazität aufweisen, sodass es nicht unbedingt erforderlich ist, dass eine eingespeiste Sache vollständig vom Quellort zum Zielort transportiert wird. Vielmehr kann es genügen, wenn eine Menge am Quellort eingespeist und eine andere Menge am Zielort entnommen wird. Das Verteilungsnetzwerk ist bevorzugt fest installiert und umfasst üblicherweise keine beweglichen Transportbehälter oder -vehikel für den des Leistungsgegenstand wie einen Lastwagen oder ein Schiff. Das Einspeisen und/oder das Entnehmen des Leistungsgegenstands ist üblicherweise kontinuierlich möglich. Insbesondere kann der Leistungsgegenstand Energie, besonders elektrische Energie, eine Flüssigkeit oder ein Gas umfassen. Der Leistungsgegenstand kann messbar, aber nicht zählbar sein.

Die Übereinkunft bezüglich Leistung und Gegenleistung sowie über den Änderungsrahmen wird üblicherweise vor dem Bewirken der Leistung getroffen.

Eine Verfügbarkeit des Leistungsgegenstands wird in einer Ausführungsform zum Zeitpunkt des Transports im Verteilungsnetzwerk bestimmt, wobei die Leistung in Abhängigkeit der Verfügbarkeit geändert wird. Beispielsweise kann ein Strom oder Volumenstrom des eingespeisten Leistungsgegenstands gedrosselt werden, wenn die Verfügbarkeit hoch ist, also tendenziell größere Mengen des Leistungsgegenstands vorhanden sind als benötigt oder nachgefragt werden.

In einer weiteren Ausführungsform wird eine Auslastung einer Komponente des Verteilungsnetzwerks zum Zeitpunkt des Transports bestimmt und die Leistung wird in Abhängigkeit der Auslastung geändert. Die Komponente kann beispielsweise eine Leitung oder eine Verteileinrichtung umfassen und der Komponente kann eine Kapazität zugeordnet sein, die angibt, wie viel des Leistungsgegenstands pro Zeit durch sie geleitet werden kann. Die Auslastung zeigt an, wie groß der verwendete Teil der verfügbaren Kapazität ist. Ist die Auslastung hoch, so kann ein eingehender oder ausgehender Strom oder Volumenstrom gedrosselt werden.

Der Änderungsrahmen kann eine obere und/oder untere Grenze für einen auf den Leistungsgegenstand bezogenen Leistungsparameter umfassen. Der Leistungsparameter kann beispielsweise einen Leistungszeitpunkt, eine Menge oder eine Qualität des Leistungsgegenstands betreffen. Der Änderungsrahmen kann auch den Zusammenhang zwischen der Leistung und der Gegenleistung betreffen. Durch den Änderungsrahmen kann dokumentiert sein, unter welchen Umständen der Transfer überhaupt stattfinden soll, und welcher Preis letztlich zu zahlen ist. Der Preis kann die Gegenleistung umfassen. Ein Teil der Gegenleistung kann an eine weitere Partei abfließen, die das Versorgungsnetzwerk betreibt, und/oder die für die Abwicklung des Transfers sorgt.

Der Zusammenhang zwischen der Leistung und der Gegenleistung kann innerhalb des gesamten Änderungsrahmens mittels einer Funktion festgelegt werden. Eine solche Funktion wird auch injektiv genannt. Die Funktion erlaubt es, den Zusammenhang ohne weitere Verhandlungen oder Einwilligungen festzulegen. Dadurch kann der einmal festgelegte Transfer ohne Unterbrechung vollständig automatisch gesteuert werden.

Die Leistung kann von einer ersten Partei und die Gegenleistung von einer zweiten Partei erbracht werden, wobei das Transportieren durch eine dritte Partei gesteuert wird. Dabei bestimmt ausschließlich die dritte Partei die Gegenleistung in Abhängigkeit von Parametern des Leistungsgegenstands bei dessen Transport. Der dritten Partei kann eine besondere Vertrauensstellung zukommen, da nur sie den Betriebszustand des Verteilungsnetzwerks umfassend beurteilen kann. Es wird daher vorgeschlagen, dass die dritte Partei auch die Abwicklung des Transfers steuert.

Die Leistung, die Gegenleistung und der Änderungsrahmen können mittels eines Smart Contract festgelegt werden. Ein Smart Contract umfasst üblicherweise ein Protokoll, das einen Vertrag abbildet, und das vollautomatisch ausgeführt werden kann. Insbesondere kann eine objektiv bestimmbare Einflussgröße berücksichtigt werden, die insbesondere den Preis beeinflussen kann, wie oben bereits ausgeführt wurde. Vertragsklauseln können algorithmisch formuliert und ihre Einhaltung automatisiert sicher gestellt werden.

Die Transaktion kann mittels einer Block Chain abgesichert werden. Dabei kann eine Vielzahl Transaktionen mittels kryptographischer Werte miteinander verkettet werden, sodass die Integrität aller Transaktionen abgesichert ist. Eine nachträgliche Änderung eines Transaktionsparameters ist somit nicht möglich. Dabei wird bevorzugt ein dezentraler Konsensmechanismus verwendet (beispielsweise Proof-of-Work, Proof-of-Stake, Proof-of-Burn oder Proof-of-Activity), um die Transaktion festzulegen.

Die Gegenleistung kann einen Transfer mittels eines digitalen Zahlungsmittels, beispielsweise einer Kryptowährung, umfassen. Das Zahlungsmittel kann zu den konvertiblen Valuta gehören oder geldwert sein. Zum Transfer der Gegenleistung können Prinzipien der Kryptographie angewandt werden, um ein verteiltes, vertrauenswürdiges und sicheres digitales Zahlungssystem zu realisieren. Für das Austauschen der Gegenleistung existieren viele bekannte Ansätze, die hier nicht weiter untersucht werden sollen. Entscheidend ist, dass die Gegenleistung aufgrund eines technischen Parameters beeinflusst werden kann, der sich auf das Verteilungsnetzwerk bezieht. Die Beeinflussung erfolgt automatisch und ist bevorzugt dazu geeignet, den technischen Parameter zu beeinflussen. Ist beispielsweise eine Komponente des Verteilungsnetzwerks für Energie überlastet, so kann durch Absenken des Preises für eingespeiste Energie dafür gesorgt werden, dass weniger Energie eingespeist wird, sodass in der Folge die Überlastung verringert werden kann.

Eine Vorrichtung zur Steuerung des oben beschriebenen zweiseitigen Transfers umfasst eine erste Schnittstelle zur Entgegennahme von Angaben der Leistung, der Gegenleistung und eines Änderungsrahmens, wobei der Änderungsrahmen angibt, in welchem Bereich die Leistung und/oder die Gegenleistung abgeändert werden können; eine zweite Schnittstelle zur Entgegennahme eines Betriebszustands des Verteilungsnetzwerks; und eine Verarbeitungseinrichtung. Dabei ist die Verarbeitungseinrichtung dazu eingerichtet, den Transport des Leistungsgegenstands zu erfassen, und die Gegenleistung auf Basis eines innerhalb des Änderungsrahmens erbrachten Leistung zu bestimmen.

Der Transport kann durch einen oder mehrere Parameter bestimmt werden, die sich auf das Verteilungsnetzwerk oder auf den Leistungsgegenstand beziehen. Beispielsweise können ein Leistungszeitpunkt, eine Menge, eine Qualität, eine Geschwindigkeit der Leistung oder ein zu diesem Zeitpunkt geltender Preis betrachtet werden.

In einer Ausführungsform ist die Verarbeitungseinrichtung auch dazu eingerichtet, den Transport des Leistungsgegenstands durch das Verteilungsnetzwerk zu steuern. Die Verarbeitungseinrichtung kann einen programmierbaren Mikrocomputer oder Mikrocontroller umfassen. Bevorzugt ist die Verarbeitungseinrichtung dazu eingerichtet, das oben beschriebene Verfahren ganz oder teilweise auszuführen. Dazu kann das Verfahren in Form eines Computerprogrammprodukts vorliegen oder auf einem computerlesbaren Datenträger gespeichert sein. Vorzüge und Merkmale des Verfahrens können auf die Vorrichtung bezogen werden und umgekehrt.

Ein System zur Steuerung des oben beschriebenen zweiseitigen Transfers umfasst ein Verteilungsnetzwerk, das zum Einspeisen eines Leistungsgegenstands an einem Quellort und zur Bereitstellung des Leistungsgegenstands an einem Zielort eingerichtet ist; eine Vorrichtung zur Bestimmung eines Betriebszustands des Verteilungsnetzwerks; und eine Verarbeitungseinrichtung. Dabei ist die Verarbeitungseinrichtung dazu eingerichtet, die Leistung, die Gegenleistung und den Änderungsrahmen zu erfassen; einen Transport des Leistungsgegenstands mittels des Verteilungsnetzwerks in Abhängigkeit des Betriebszustands des Verteilungsnetzwerks zu erfassen; und die Gegenleistung auf Basis der innerhalb des Änderungsrahmens erbrachten Leistung zu bestimmen.

Die Verarbeitungseinrichtung kann von der oben beschriebenen Vorrichtung umfasst sein, und die Vorrichtung kann von dem System umfasst sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

Fig. 1    ein beispielhaftes System; und
Fig. 2    ein Ablaufdiagramm eines Verfahrens

darstellt.

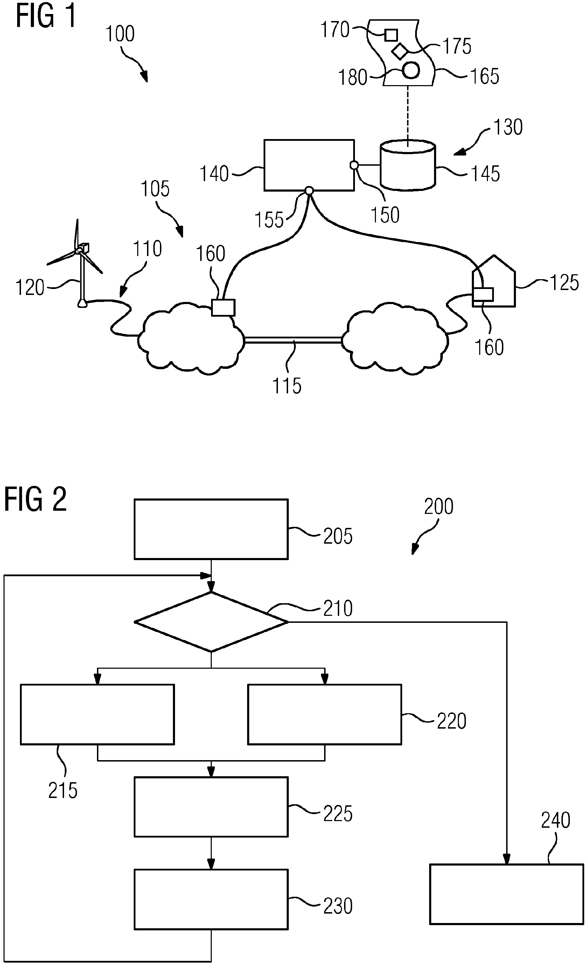

Figur 1 zeigt ein beispielhaftes System 100. Das System 100 umfasst ein Verteilungsnetzwerk 105, das zum Transportieren eines Leistungsgegenstands 110 eingerichtet ist, und wenigstens eine Komponente 115 umfasst. Mit dem Verteilungsnetzwerk 105 sind eine oder mehrere erste Parteien 120 verbunden, die den Leistungsgegenstand 110 in das Verteilungsnetzwerk 105 einspeisen können und hier auch Einspeiser 120 genannt werden, und eine oder mehrere zweite Parteien 125, die den Leistungsgegenstand 110 aus dem Verteilungsnetzwerk 105 entnehmen können und hier auch Entnehmer 125 genannt werden. Das Verteilungsnetzwerk 105 kann durch eine dritte Partei 130 gesteuert werden, die hier auch Betreiber 130 genannt wird.

In der dargestellten Ausführungsform ist das Versorgungsnetzwerk 105 zum Transport von elektrischer Energie (elektrischem Strom) eingerichtet, in anderen Ausführungsformen kann jedoch auch ein anderer Stoff, ein Medium, insbesondere ein Fluid, oder eine andere Energieform transportiert werden. In jedem Fall handelt es sich beim Versorgungsnetzwerk 105 um eine technisch-physikalische Einrichtung, ohne die der Transport nicht durchgeführt werden kann. Der Komponente 115 kann eine Kapazität zugeordnet sein, die angibt, wie viel des Leistungsgegenstands 110 durch sie transportiert werden kann. Die Kapazität kann die Nutzbarkeit des Versorgungsnetzwerks 105 bestimmen.

Der Betreiber 130 umfasst oder steuert bevorzugt eine Vorrichtung 135, die eine Verarbeitungsvorrichtung 140 und optional eine Speichereinrichtung 145 umfassen kann. Mittels einer optionalen ersten Schnittstelle 150 kann die Vorrichtung 135 Informationen insbesondere über einen Kontrakt, der unten noch genauer beschrieben wird, entgegennehmen, und mittels einer zweiten Schnittstelle 155 kann einen Betriebszustand des Verteilungsnetzwerks 105 bestimmen. Dazu kann die zweite Schnittstelle 155 mit einer Abtastvorrichtung 160 am oder im Verteilungsnetzwerk 105, an einer Komponente 115, am Einspeiser 120, am Verbraucher 125 oder zwischen dem Versorgungsnetzwerk 105 und dem Einspeiser 120 oder dem Verbraucher 125 angebracht sein.

Mit Hilfe der Abtastvorrichtung 160 kann die dritte Partei 130 als "Orakel" bezüglich eines Vertrags 165 auftreten. Dabei stellt die dritte Partei 130 als neutrale Stelle einen Parameter bereit, der Einfluss auf die Ausführung eines Vertrags 165 hat, wie unten noch genauer ausgeführt wird.

Dem Transport des Leistungsgegenstands 110 im Verteilungsnetzwerk 105 ist bevorzugt ein Kontrakt 165 zu Grunde gelegt, der letztlich einen Vertrag oder ein Abkommen darstellen kann, auf den sich die beteiligten Parteien 120-130 geeinigt haben. Der Kontrakt 165 umfasst bevorzugt eine Leistung 170, eine Gegenleistung 175 und einen Änderungsrahmen 180. Die Leistung 170 besteht in der Bereitstellung des Leistungsgegenstands 110, wobei der Leistung 170 ein Zeitpunkt, ein Einspeiseort, ein Entnahmeort, eine Menge, eine Qualität, ein Strom oder Volumenstrom oder andere oder weitere Attribute zugeordnet sein können. Die Gegenleistung 175 kann praktisch beliebig definiert sein, in der Regel betrifft sie den Transfer eines insbesondere digitalen Zahlungsmittels, beispielsweise einer Kryptowährung, vom Entnehmer 125 an den Einspeiser 120. Üblicherweise fällt auch ein Teil der Gegenleistung 175 dem Betreiber 130 zu.

Der Kontrakt 165 definiert weiter, in welchem Verhältnis die Leistung 170 und die Gegenleistung 175 stehen sollen. Das Verhältnis kann fest vorgegeben oder in Abhängigkeit eines oder mehrerer der oben erwähnten Parameter bestimmt sein. Dieses Verhältnis kann auch Preis genannt werden, obwohl die Gegenleistung 175 nicht in Geld bestehen muss.

Der Kontrakt 165 wird üblicherweise zu einem Zeitpunkt festgelegt, zu dem nicht alle Bedingungen bekannt sind, unter denen er erfüllt werden soll. Beispielsweise kann ein Erbringungszeitpunkt - oder ein zeitlicher Erbringungsbereich - in der Zukunft liegen, wobei die Leistungsfähigkeit des Einspeiser 120 zum Bereitstellen des Leistungsgegenstands 120 nicht genau bekannt ist. Ferner kann nicht genau bekannt sein, in welchem Betriebszustand sich das Verteilungsnetzwerk 105 zum Leistungszeitpunkt befindet. Häufig sprechen technische Gründe vor, die in der Bauart, Ausprägung oder Belastung des Verteilungsnetzwerks 105 liegen, und die beeinflussen, in welcher Weise der Kontrakt erfüllt werden kann.

Solche Gründe können auf den Betriebszustand des Verteilungsnetzwerks 105 zurückgeführt werden. Der Betriebszustand kann insbesondere eine Verfügbarkeit des Leistungsgegenstands 120 zur fraglichen Zeit oder die Auslastung einer Komponente 115 betreffen. Besteht beispielsweise im dargestellten Energieverteilungsnetz 105 ein Überangebot von Strom, so kann unter Umständen das Einspeisen weiteren Stroms aus technischen Gründen nicht sinnvoll oder nicht möglich sein. Ist die Kapazität einer Komponente 115 ausgeschöpft, so kann ein Transport durch die Komponente 115 beschränkt, risikobehaftet oder gar unmöglich sein.

Es wird vorgeschlagen, die Leistung 170 und die Gegenleistung 175 so zu definieren, dass ihre Bedingungen oder ihr Zusammenspiel durch den Betreiber 130 geändert werden können, falls es zum Zeitpunkt der Erbringung der Leistung 170 ein technisches Erfordernis dafür gibt. Insbesondere kann der Zusammenhang zwischen der Leistung 170 und der Gegenleistung 175, der allgemein auch als Preis bekannt ist, verändert werden können, um die Einspeisung oder die Entnahme des Leistungsgegenstands 120 zu bevorzugen bzw. attraktiver zu machen. Dabei kann bei Abschluss des Kontrakts 165 festgelegt werden, unter welchen Bedingungen noch alle Parteien 120, 125, 130 dazu bereit sind, den Kontrakt 165 zu erfüllen. Sinkt beispielsweise der Preis unter einen vorbestimmten Schwellenwert, so kann der Einspeiser 120 kein Interesse an der Ausübung des Kontrakts 165 mehr haben. Steigt der Preis über einen anderen Schwellenwert, so kann der Entnehmer 125 das Interesse am Kontrakt 165 verlieren. Besteht ein Problem im Bereich des Energieverteilungsnetzwerks 105, so kann der Betreiber 130 den Kontrakt 165 nicht mehr erfüllen.

Der Preis kann als Funktion eines Parameters des Energieverteilungsnetzwerks 105 festgelegt sein. Die Funktion kann linear, polynomial oder anders ausgestaltet sein und ist bevorzugt mindestens im Bereich der Bedingungen, unter denen der Kontrakt 165 erfüllt werden soll, definiert.

Der Kontrakt 165 kann mittels eines Block Chain Verfahrens abgesichert werden, sodass er nach seinem Abschluss nicht unbemerkt verändert werden kann. Die Parteien 120-130 können dadurch verbessert an den Kontrakt 165 gebunden werden. Die Ausführung des Kontrakts 165 kann vollständig automatisiert erfolgen. Dabei kann die Gegenleistung 175 bewirkt, freigegeben oder zumindest bestimmt werden. Die Gegenleistung 175 kann einen Geldtransfer oder eine Gutschrift erfordern. Dazu kann eine weitere Stelle erforderlich sein, die treuhänderisch tätig ist und beispielsweise ein Konto oder eine ähnliche Instanz verwaltet. Diese Stelle kann mit dem Betreiber 130 zusammenfallen.

Das Verwalten des Smart Contracts 165 kann ein Aushandeln von Bedingungen, das Hinterlegen einer Zustimmung der Beteiligten und das Validieren des Vertrags 165 durch eine vertrauenswürdige weitere Partei umfassen. Diese weitere Partei kann insbesondere durch die dritte Partei 130 gebildet sein.

Für die Verwaltung von Verträgen 165 kann eine eigene Infrastruktur erforderlich sein, um Sicherheit, Verfügbarkeit und Vertrauenswürdigkeit in ausreichendem Maß sicher zu stellen. Dazu kann insbesondere ein Asset Register, also eine Aufstellung der Bestandteile eines Vertrags 165 bzw. einer Vielzahl von Verträgen 165, vorgehalten werden. Das Asset Register kann repliziert, also periodisch oder ereignisgesteuert an verschiedenen Einrichtungen inhaltlich synchron gehalten werden. Die Replikation erfolgt bevorzugt fehlertolerant. Die Ausführung eines Vertrags 165 kann mittels Hash-Ketten abgesichert werden, insbesondere mittels eines Block Chain Verfahrens, bei dem alle Transaktionen mittels kryptographischer Methoden miteinander verkettet werden.

Figur 2 zeigt ein Ablaufdiagramm eines Verfahrens 200 zum Steuern eines zweiseitigen Transfers. Das Verfahren 200 ist bevorzugt zur Steuerung des Systems 100 von Figur 1 oder einer oder mehrerer seiner Teile eingerichtet.

In einem Schritt 205 werden die Leistung 170, die Gegenleistung 175 und der Änderungsrahmen 180 erfasst, die üblicherweise von einem Kontrakt 165 umfasst sind. Es können noch weitere Bedingungen festgelegt sein, beispielsweise ein variabler Preis, also ein von einem Parameter abhängiges Verhältnis zwischen der Leistung 170 und der Gegenleistung 175 umfassen können. Der Parameter bezieht sich dabei bevorzugt auf das Verteilungsnetzwerk 105, eine seiner Komponenten 115 oder Eigenschaften oder den Transportvorgang, mit dem der Leistungsgegenstand 120 durch das Verteilungsnetzwerk 105 transportiert wird. Ferner können eine oder mehrere Bedingungen angegeben sein, unter der der Kontrakt 165 überhaupt ausgeführt werden soll. Diese Bedingungen können beispielsweise einen Zeitpunkt, einen Zeitraum oder einen Preis umfassen.

Üblicherweise müssen alle angegebenen Bedingungen erfüllt sein, damit der Kontrakt 165 ausgeführt wird.

In einem Schritt 210 wird überprüft, ob die eine oder mehrere Bedingungen erfüllt sind. Ist dies der Fall, so kann in einem Schritt 215 das Transportieren des Leistungsgegenstands 110 erfasst werden. Beispielsweise kann hierfür eine der Abtastvorrichtungen 160 abgefragt werden, die das Fließen des Leistungsgegenstands 110 in, durch oder aus dem Verteilungsnetzwerk 105 erfassen.

Ein Betriebszustand des Verteilungsnetzwerks 105, der den Transportvorgang beeinflussen kann, wird bevorzugt parallel zum Transportvorgang in einem Schritt 220 bestimmt.

Der Betriebszustand kann bestimmen, ob und in welcher Weise bzw. in welchem Maß der Kontrakt 165 von seinen ursprünglichen Parametern abgeändert wird. Dazu kann in einem Schritt 225 auf der Basis des bestimmten Betriebszustands und des beobachteten Transports bestimmt werden, welche Leistung 170 erbracht wurde, und wie die erbrachte Leistung 165 zu bewerten ist.

Dementsprechend kann in einem Schritt 230 auf Basis des Kontrakts 165 und der geltenden Parameter bestimmt werden, welche Gegenleistung 175 der Leistung 170 zuzuordnen ist. Dabei kann der ursprünglich abgeschlossene Vertrag 165 innerhalb des Änderungsrahmens 180 abgeändert werden. In einer Ausführungsform beeinflusst beispielsweise der Betriebszustand des Verteilungsnetzwerks 105 den Preis, der den Zusammenhang zwischen Leistung 170 und Gegenleistung 175 beschreibt. In einer Ausführungsform wird die Menge des durch das Verteilungsnetzwerks 105 akzeptierten oder bereitgestellten Leistungsgegenstands (ggf. pro Zeit) auf Basis des Betriebszustands beschränkt.

Die Gegenleistung 175 fließt üblicherweise vom Entnehmer 125 zum Einspeiser 120, wobei ein Teil der Gegenleistung 175 an den Betreiber 130 fließen kann. Dabei sind auch Variationen möglich, beispielsweise kann der Betreiber 130 dem Einspeiser 120 auch dann eine Gegenleistung schulden, wenn die Einspeisung auf Basis des Betriebszustands des Verteilungsnetzwerks 105 reduziert oder verweigert werden musste.

Das Verfahren 200 kann zum Schritt 210 zurückkehren und erneut durchlaufen. Wurde im Schritt 210 bestimmt, dass die Bedingungen des Kontrakts 165 nicht erfüllt sind, so kann der Transport in einem Schritt 240 abgebrochen werden. Die geltenden Bedingungen können weiter überwacht werden, um ggf. den Transport zu einem späteren Zeitpunkt wieder zu beginnen, wie oben beschrieben ist.

Hintergrund der Erfindung

In der folgenden Erläuterung wird der Kontrakt 175 auch Vertrag oder Smart Contract genannt. Der Einspeiser 120 wird A und der Entnehmer 125 wird B genannt. Der Betreiber 130 kann mit einer Partei TP zusammen fallen. Der Leistungsgegenstand 110 wird G genannt.

Ein Smart Contract umfasst üblicherweise ein durch einen oder mehrere Computer oder andere Einrichtungen ausführbares Protokoll, das einen Vertrag abbildet. Ein üblicher Smart Contract kann üblicherweise in der Form

$$C(A,B,\$)$$

abstrahiert werden, was ausgedrückt werden kann als: "Instanz A zahlt an Instanz B den Betrag $ in einer elektronischen Währung". Die Währung kann insbesondere eine Kryptowährung wie Bitcoin umfassen.

In einer Variante liegt der Smart Contract in der Form

$$C(A,B,G)$$

vor, was ausgedrückt werden kann als "Instanz A gibt das Eigentum über den Leistungsgegenstand G an Instanz B ab".

Es gibt auch andere Arten von Smart Contracts, in denen eine Einzahlung bewirkt wird (die rückerstattet werden kann, falls ein vorbestimmtes Ereignis eintritt) oder eine mehrfache Einzahlung von mehreren Instanzen bewirkt wird (und der Smart Contract in Abhängigkeit von Entscheidungen der Instanzen, sowie möglicherweise externer Bedingungen, zurückgezogen oder bestätigt werden kann.

Es ist hier nicht von Belang, wie ein Smart Contract durchgesetzt wird, lediglich was der Smart Contract ausdrücken kann und wie er nach seinem Abschluss auf der Basis einer Bedingung automatisch abgeändert werden kann.

Die für einen Smart Contract bevorzugte Methode wird "Orakel" genannt, wobei das Orakel bevorzugt für einen Online Dienst steht, die bestimmte Daten bereitstellen, beispielsweise die Fußballergebnisse, den Wert einer Aktie etc. Ein Orakel wird üblicherweise von mehreren Anbietern repliziert, um die Verlässlichkeit und Sicherheit zu erhöhen. Hier kann der Smart Contract als Ausdruck der Form

$$C(A,B, \$ [Ort G], c)$$

angegeben werden, was ausgedrückt werden kann als "Instanz A gibt den Betrag $ [oder das Eigentum über den Leistungsgegenstand G] an Instanz B, falls die Bedingung c (innerhalb eines vorbestimmten Zeitfensters) wahr ist und falls die Transaktion dann nicht ungültig ist. Andere Arten von Smart Contract unterstützen Auktionen, das Finden des höchsten Bieters und das Widerrufen der Transaktionen aller anderen Bieter.

Es wird vorgeschlagen, einen Smart Contract zwischen wenigstens zwei Instanzen A und B derart herzustellen, dass der Smart Contract auf eine festgelegte Art und Weise durch eine vertrauenswürdige Dritte TP ("trusted party") abgeändert werden kann, bevor die Transaktion als gültig akzeptiert wird. Im Fall eines Smart Grid 105 zur Verteilung von Energie kann ein Benutzer A (Einspeiser 120) beschließen, eine bestimmte Menge # von elektrischer Energie (dem Leistungsgegenstand 110, ausgedrückt beispielsweise in kWh) zu einem bestimmten Preis $ zu einem bestimmten Zeitpunkt oder in einem bestimmten Zeitfenster T an eine andere Instanz B zu verkaufen. Der Smart Contract sähe dann wie folgt aus:

$$C(A,B, \#, \$, T)$$

Hierin wird nicht beschrieben, wie der Vertrag zwischen A und B zu Stande gekommen ist, beispielsweise durch eine Auktion oder eine andere Weise. Es wird nun ein Verfahren vorgeschlagen, den Vertrag mit zwei Erweiterungen abzuschließen:

1.) Ein "Meta-Vertrag" legt die Bedingungen fest, unter denen ein Smart Contract C gültig ist und wie dessen Bedingungen in einer Zustimmungsphase verändert werden können. Der Meta-Vertrag gibt den Änderungsrahmen für den eigentlichen Vertrag an.

2.) Ein "abgeänderter Vertrag" legt fest, wie der bestätigte und veränderte Vertrag abgeschlossen wurde. Anders ausgedrückt legt der abgeänderte Vertrag fest, welcher konkrete Vertrag, der aus einem Meta-Vertrag auf der Basis einer vorbestimmten Bedingung hervorging, tatsächlich gilt. Im Folgenden bezeichnen Variablen mit Apostroph jeweils die abgeänderte Variable; V wird beispielsweise zu V' abgeändert.

Ein gültiger Vertrag C kann wie folgt zu Stande kommen:

1.) Eine Instanz T erstellt einen Meta-Vertrag M, der durch die anderen Instanzen später als Rahmenvertrag oder Master Vereinbarung verwendet werden kann. Die Instanz T kann eine vertrauenswürdige Stelle sein, die insbesondere durch den Betreiber 130 gebildet oder betrieben werden kann. Der Meta-Vertrag M hat die Form:

$$M = C(T3P, c, R(\#, \$, T, \#', \$', T', c, c')),$$

wobei T3P die vertrauenswürdige Stelle oder ein Mitglied einer Gruppe vertrauenswürdiger Stellen ist, der es erlaubt ist, einen vorgeschlagenen Vertrag abzuändern und zu bestätigen. c ist eine feste (statische) Bedingung, R ist ein Programm (ausführbarer Programmcode), das WAHR oder FALSCH (bzw. 0 oder 1) ausgibt, je nachdem ob eine vorbestimmte Bedingung Rcond auf (#, $, T, #', $', T', c, c') WAHR ist.
R stellt somit sicher, dass die alten Werte #, $, T, die geänderten Werte #', $', T', die statisch ausgedrückte Bedingung c und die zusätzliche Bedingung c' das vorbestimmte Verhältnis Rcond erfüllen. Im Fall eines Smart Grid kann R so einfach sein wie #' <= #, was bedeutet, dass der veränderte Wert der transportierten elektrischen Energie kleiner oder gleich dem vertraglich angenommenen Wert ist. So eine Klausel kann nützlich sein, um eine Überlastung des Austauschnetzwerks 105 zu vermeiden.
2.) Die Instanzen A und B einigen sich auf die Bedingungen eines vorgeschlagenen Vertrags M:

C = C(A, B, M, #, $, T), was ausgedrückt werden kann als "A verpflichtet sich, zu einem bestimmten Zeitpunkt oder in einer bestimmten Zeitspanne T eine bestimmte Menge # elektrischer Energie (z. B. in kWh) an eine andere Instanz B für einen bestimmten Wert $ zu verkaufen, wobei der Vertrag von den zusätzlichen Bedingungen des Meta-Vertrags M abhängig ist". Der Meta-Vertrag M gibt also den Änderungsrahmen vor, in welchem der geschlossene Vertrag C abgeändert werden kann.

In einer Implementation muss M nicht eine Kopie eines Meta-Vertrags sein, sondern kann einfach eine Art Pointer oder Verweis auf den Meta-Vertrag sein, insbesondere ein Hash Pointer auf M.
3.) Damit dieser Vertrag gültig ist, kann eine vertrauenswürdige dritte Partei (z. B die dritte Partei 130), die durch den Meta-Vertrag M zu dieser Rolle autorisiert ist, den Vertrag C abändern, bevor sie ihn validiert. Das erfolgt durch einen neuen abgeänderten Vertrag:

RC(C(A, B, M, #, $, T), T3P, #', T', c') = RC(C, T3P, #', $', T', c'), was ausgedrückt werden kann als: "TP validiert und akzeptiert den Vertrag C(A, B, M, #, T), der von A und B vorgeschlagen wurde, ändert dabei aber die Werte von # in #', $ in $' und T in T'". Im Fall des Smart Grid erscheint es sinnvoll, den Betreiber 130 die Menge # der elektrischen Energie zu ändern oder eine zusätzliche Bedingung c' hinzufügen zu lassen, um die Stabilität des elektrischen Austauschnetzwerks 105 sicher zu stellen.

Die Art, wie die Werte von #, $, und T durch T3P abgeändert und die zusätzliche Bedingung c' hinzugefügt wird, muss in Einklang mit dem Meta-Vertrag M stehen, auf den im Vertrag C hingewiesen wird. Dass dies tatsächlich der Fall ist, also dass eine autorisierte Partei den Vertrag auf eine autorisierte Art und Weise abgeändert und bewilligt hat, sollte durch die Instanzen, die am System teilnehmen, als Teil ihrer Verifikationsaufgabe im Umfeld von Smart Contracts überprüft werden. In einer Implementation muss C keine Kopie des vorgeschlagenen Vertrags sein, sondern kann einfach eine Art Pointer oder Verweis auf den Vertrag C sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (200) zum Steuern eines zweiseitigen Transfers (165), der das Erbringen einer Leistung (170) und einer Gegenleistung (175) umfasst, wobei das Erbringen der Leistung (170) das Transportieren eines Leistungsgegenstands (110) mittels eines Verteilungsnetzwerks (105) erfordert, wobei das Verfahren (200) folgende Schritte umfasst:

   - Erfassen (205) der Leistung (170) und der Gegenleistung (175);
   - Erfassen (205) eines Änderungsrahmens (180), der angibt, in welchem Bereich die Leistung (170) und/oder die Gegenleistung (175) abgeändert werden können;
   - Transportieren (215) des Leistungsgegenstands (110) mittels des Verteilungsnetzwerks (105) in Abhängigkeit eines Betriebszustands des Verteilungsnetzwerks (105); und
   - Bestimmen (230) der Gegenleistung (175) auf Basis der innerhalb des Änderungsrahmens (180) erbrachten Leistung (170).

2. Verfahren (200) nach Anspruch 1, wobei das Transportieren ein Einspeisen des Leistungsgegenstands (110) an einem Quellort und ein Entnehmen des Leistungsgegenstands (110) an einem Zielort umfasst.

3. Verfahren (200) nach Anspruch 1 oder 2, wobei eine Verfügbarkeit des Leistungsgegenstands (110) im Verteilungsnetzwerk (105) zum Zeitpunkt des Transports bestimmt und die Leistung (170) in Abhängigkeit der Verfügbarkeit geändert (230) wird.

4. Verfahren (200) nach Anspruch 2 oder 3, wobei eine Auslastung einer Komponente (115) des Verteilungsnetzwerks (105) zum Zeitpunkt des Transports bestimmt und die Leistung (170) in Abhängigkeit der Auslastung geändert wird.

5. Verfahren (200) nach einem der vorangehenden Ansprüche, wobei der Änderungsrahmen (180) eine obere und/oder untere Grenze für einen auf den Leistungsgegenstand (110) bezogenen Leistungsparameter umfasst.

6. Verfahren (200) nach einem der vorangehenden Ansprüche, wobei der Zusammenhang zwischen der Leistung (170) und der Gegenleistung (175) innerhalb des gesamten Änderungsrahmens (180) mittels einer Funktion festgelegt wird.

7. Verfahren (200) nach einem der vorangehenden Ansprüche, wobei die Leistung (170) von einer ersten Partei und die Gegenleistung (175) von einer zweiten Partei erbracht wird, wobei das Transportieren durch eine dritte Partei gesteuert wird, und ausschließlich die dritte Partei die Gegenleistung (175) in Abhängigkeit von Parametern des Leistungsgegenstands (110) bei dessen Transport bestimmt.

8. Verfahren (200) nach einem der vorangehenden Ansprüche, wobei die Leistung (170), die Gegenleistung (175) und der Änderungsrahmen (180) mittels eines Smart Contract festgelegt werden.

9.  Verfahren (200) nach einem der vorangehenden Ansprüche, wobei die Transaktion mittels einer Block Chain abgesichert (205) wird.

10. Verfahren (200) nach einem der vorangehenden Ansprüche, wobei die Gegenleistung (175) einen Transfer eines digitalen Zahlungsmittels umfasst.

11. Vorrichtung (130) zur Steuerung eines zweiseitigen Transfers (165), der das Erbringen einer Leistung (170) und einer Gegenleistung (175) umfasst, wobei das Erbringen der Leistung (170) das Transportieren eines Leistungsgegenstands (110) mittels eines Verteilungsnetzwerks (105) erfordert, wobei die Vorrichtung folgende Elemente umfasst:

    - eine erste Schnittstelle (150) zur Entgegennahme von Angaben der Leistung (170), der Gegenleistung (175) und eines Änderungsrahmens (180), wobei der Änderungsrahmen (180) angibt, in welchem Bereich die Leistung (170) und/oder die Gegenleistung (175) abgeändert werden können;
    - eine zweite Schnittstelle (155) zur Entgegennahme eines Betriebszustands des Verteilungsnetzwerks (105);
    - eine Verarbeitungseinrichtung (140), die dazu eingerichtet ist:

        o den Transport des Leistungsgegenstands (110) zu erfassen, und
        ◦ die Gegenleistung (175) auf Basis einer innerhalb des Änderungsrahmens (180) erbrachten Leistung (170) zu bestimmen.

12. System (100) zur Steuerung eines zweiseitigen Transfers (165), der das Erbringen einer Leistung (170) und einer Gegenleistung (175) umfasst, wobei das Erbringen der Leistung (170) das Transportieren eines Leistungsgegenstands (110) mittels eines Verteilungsnetzwerks (105) erfordert, wobei das System folgendes umfasst:

    - ein Verteilungsnetzwerk (105), das zum Einspeisen eines Leistungsgegenstands (110) an einem Quellort und zur Bereitstellung des Leistungsgegenstands (110) an einem Zielort eingerichtet ist;
    - Eine Vorrichtung (160) zur Bestimmung eines Betriebszustands des Verteilungsnetzwerks (105);
    - eine Verarbeitungseinrichtung (140), die dazu eingerichtet ist:

        ◦ die Leistung (170), die Gegenleistung (175) und einen Änderungsrahmen (180) zu erfassen, wobei der Änderungsrahmen (180) angibt, in welchem Bereich die Leistung (170) und/oder die Gegenleistung (175) abgeändert werden können;
        ◦ einen Transport des Leistungsgegenstands (110) mittels des Verteilungsnetzwerks (105) in Abhängigkeit des Betriebszustands des Verteilungsnetzwerks (105) zu erfassen; und
        ◦ die Gegenleistung (175) auf Basis der innerhalb des Änderungsrahmens (180) erbrachten Leistung (170) zu bestimmen.

FIG 1

100

170
175
180
165
130
145

140
150
155

105
110
160
120
125
160

115

FIG 2

205
200

210

215
220

225

240

230

**Europäisches Patentamt**
**European Patent Office**
**Office européen des brevets**

# EUROPÄISCHER RECHERCHENBERICHT

Nummer der Anmeldung

EP 17 17 2779

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 533 389 A2 (MVV EN AG [DE]) 12. Dezember 2012 (2012-12-12) * Absatz [0027] - Absatz [0036]; Abbildungen 1-3 * | 1-12 | INV. H02J3/00 G06Q30/06 G06Q40/04 G06Q50/06 |
| | ----- | | |
| X | DE 10 2012 219837 A1 (SIEMENS AG [DE]) 30. April 2014 (2014-04-30) * Absatz [0025] - Absatz [0053]; Abbildungen 1-5 * | 1-12 | |
| | ----- | | |
| X | DE 10 2004 044127 A1 (DADA JOSEPH OLUFEMI [DE]; KOCHS HANS-DIETER [DE]; KOENIG DIRK [DE]; PA) 30. März 2006 (2006-03-30) * Absatz [0033] - Absatz [0064]; Abbildungen 1-4 * | 1-12 | |
| | ----- | | |
| X | US 9 425 620 B2 (DAVID P. CHASSIN; ROBERT G. PRATT) 23. August 2016 (2016-08-23) * Spalte 10, Zeilen 9-59; Abbildung 3 * | 1-12 | RECHERCHIERTE SACHGEBIETE (IPC) H02J G06Q |
| | ----- | | |

Der vorliegende Recherchenbericht wurde für alle Patentansprüche erstellt

| Recherchenort | Abschlußdatum der Recherche | Prüfer |
|---|---|---|
| München | 20. November 2017 | Lindquist, Jim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 17 2779

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2017

| Im Recherchenbericht angeführtes Patentdokument | | Datum der Veröffentlichung | Mitglied(er) der Patentfamilie | | Datum der Veröffentlichung |
|---|---|---|---|---|---|
| EP 2533389 | A2 | 12-12-2012 | DE 102011106114 A1 | | 13-12-2012 |
| | | | EP 2533389 A2 | | 12-12-2012 |
| DE 102012219837 A1 | | 30-04-2014 | DE 102012219837 A1 | | 30-04-2014 |
| | | | WO 2014067675 A1 | | 08-05-2014 |
| DE 102004044127 A1 | | 30-03-2006 | KEINE | | |
| US 9425620 | B2 | 23-08-2016 | CA 2749373 A1 | | 15-07-2010 |
| | | | US 2010179862 A1 | | 15-07-2010 |
| | | | WO 2010081165 A2 | | 15-07-2010 |

EPO FORM P0461

Für nähere Einzelheiten zu diesem Anhang : siehe Amtsblatt des Europäischen Patentamts, Nr.12/82